# FASCICULE DE BREVET EUROPEEN

(11) **EP 0 515 592 B1**
(45) Date de publication et mention de la délivrance du brevet: **22.03.1995**
(21) Numéro de dépôt: 91919475.3
(22) Date de dépôt: 08.11.1991
(51) Int. Cl.: B60B 21/10, B60C 15/02

(54) **JANTE A SIEGES INCLINES ET ENSEMBLE D'UNE TELLE JANTE AVEC UN PNEUMATIQUE**
FELGE MIT SCHRÄGENSCHULTERN UND DIE EINHEIT DIESER MIT EINEM REIFEN
WHEEL RIM WITH INCLINED SEATS FOR COMBINING WITH A TYRE

(30) Priorité: 04.12.1990 FR 9015270
(43) Date de publication de la demande: 02.12.1992
(73) Titulaire: COMPAGNIE GENERALE DES ETABLISSEMENTS MICHELIN - MICHELIN & CIE, 63040 Clermont-Ferrand Cédex (FR)
(72) Inventeur: BILLIERES, Jean, F-63100 Clermont-Ferrand (FR)
(74) Mandataire: Devaux, Edmond-Yves
(86) Numéro de dépôt international: EP9102121
(87) Numéro de publication internationale: WO9210373

(56) Documents cités:
- GB-A- 1 584 554
- US-A- 2 731 064
- PATENT ABSTRACTS OF JAPAN, vol. 14, No. 393 (M-1015)(4336) 24 August 1990; & JP-A-02147402 (SUMITOMO) 6 Juin 1990
- PATENT ABSTRACTS OF JAPAN, vol. 8, No.16 (M-270)(1453) 24 January 1984; & JP-A-58177701 (BRIDGESTONE) 18 Octobre 1983

## Description

La présente invention concerne une jante monobloc à sièges tronconiques inclinés à 15° ± 1° sur laquelle est destiné à être monté un pneumatique de type "Poids lourd" sans chambre à air indépendante. Elle concerne aussi l'ensemble d'une telle jante avec un pneumatique dont les bourrelets ont des sièges de forme adaptée.

De tels ensembles connus, très répandus, présentent de grands avantages : les risques de projection de pièces métalliques étant supprimés, une plus grande sécurité est assurée ; les pneumatiques utilisés étant des pneumatiques sans chambre à air indépendante, l'absence de celle-ci et du flap procure une économie non négligeable tout en évitant les frottements et pincements entre pneumatique, chambre et jante et ainsi les échauffements et crevaisons de la chambre à air.

Les jantes à sièges ou seats inclinés à 15° connues ont des dimensions normalisées selon les normes internationales en vigueur (T.R.A. ; ETRTO). Sur de telles jantes sont, de manière connue, montés des pneumatiques dont les bourrelets ont des sièges tronconiques. La génératrice d'un siège est soit rectiligne en faisant avec l'axe de rotation du pneumatique un angle généralement compris entre 15° et 20° ; soit formée de deux segments l'un étant incliné de 15°, l'autre, prolongeant axialement à l'intérieur le premier, étant incliné d'un angle supérieur à 15° et même à 25°. Ces jantes normalisées comportent dans leur partie centrale une gorge dite de montage, car celle-ci permet le montage du pneumatique sur la jante. Le diamètre radialement intérieur de cette gorge est un obstacle majeur au choix de tambours de freins ou d'étriers de freins à disques de diamètres plus grands, ce qui permettrait une efficacité de freinage supérieure.

Toute augmentation du diamètre de la gorge de montage, sans aucun autre changement, soit des bourrelets du pneumatique destiné à être monté, soit des autres parties de la jante, rend le montage du pneumatique pratiquement impossible.

Le but de l'invention est de pouvoir augmenter le diamètre de la gorge de montage des jantes normalisées à sièges inclinés à 15° et de permettre cependant le montage de pneumatiques usuels ayant des bourrelets dont les sièges tronconiques sont adaptés aux jantes normalisées.

La jante (J'), conforme à l'invention, de diamètre nominal normalisé (D_{N}) ; de largeur axiale normalisée (A) et ayant des sièges inclinés d'un angle de 15 ± 1° par rapport à l'axe de rotation, est caractérisé en ce que, vue en section méridienne, la largeur axiale (P') de chacun de ses sièges est comprise entre 35 % et 55 % de la largeur (P) minimale normalisée de chacun des sièges tronconiques de la jante (J) normalisée ayant même diamètre nominal (D_{N}) et même largeur axiale (A), et en ce que sa gorge de montage présente une profondeur (H') comprise entre 65 % et 75 % de la profondeur (H) de la gorge de montage de la jante (J) de référence, ladite gorge de la jante (J') étant réunie du côté du montage du pneumatique directement au siège tronconique et du côté opposé au côté de montage du pneumatique, à une partie cylindrique de diamètre identique au diamètre de la partie cylindrique de la jante de référence (J), ladite partie cylindrique étant reliée au siège tronconique par deux arcs de cercle axialement adjacents de rayons égaux.

Si une telle jante permet le montage des pneumatiques actuels ayant des bourrelets à sièges tronconiques, dont les génératrices font avec l'axe de rotation, soit un angle unique, soit deux angles différents, l'ensemble formé par la jante décrite ci-dessus et un pneumatique, dont les bourrelets ont de sièges de forme adaptée, se montre particulièrement avantageux.

Conformément à l'invention, l'ensemble cité comprend un pneumatique ayant des sièges de bourrelets, de diamètre au plus égal au diamètre (D_{N}) de la jante de montage, et dont le profil méridien se compose d'une portion inclinée d'un angle compris entre 15° et 20° et de largeur axiale (Lₒ) comprise entre 90 % et 110 % de la largeur (P') du siège de jante (J'), prolongée axialement à l'intérieur par une portion faisant avec l'axe de rotation de l'ensemble un angle compris entre 5°et O° et de largeur au plus égale à la largeur (Lₒ).

Il faut entendre par diamètre d'un bourrelet, le diamètre mesuré à l'intersection de la génératrice tronconique du siège de bourrelet et de la paroi axialement extérieure dudit bourrelet, paroi sensiblement verticale.

Il est connu par le brevet FR 1 127 147 que le siège d'un bourrelet, dont la largeur est pratiquement égale à la largeur du siège d'une jante de dimensions normalisées, entraîne de forts glissements entre la partie axialement intérieure de point du bourrelet et la jante, ces glissements donnant naissance à une usure de ladite pointe. Le document ci-dessus enseigne de tronquer la pointe du bourrelet, de sorte que le contact entre ladite pointe et la jante soit supprimé, ainsi que l'usure qui en résulte, que ce soit l'usure du bourrelet ou l'usure de la jante. Ce document ne concerne pas le montage du pneumatique à sièges de bourrelets tronconiques à 15° sur une jante dont la gorge de montage a une profondeur diminuée par rapport à la profondeur normalisée.

Outre que l'ensemble conforme à l'invention permet aussi une usure moindre de la pointe intérieure du bourrelet, le fait que cette pointe soit fortement éloignée de la jante conforme à l'invention permet un échauffement moindre du bourrelet avec, comme conséquences bénéfiques, une meilleure endurance de la zone basse du pneumatique. En particulier, le déroulement de l'armature de carcasse autour de la tringle est évitée. De même, la pointe de gomme, conservant ses propriétés initiales et ne se durcissant pas par échauffement, résiste beaucoup mieux aux efforts imposés lors du démontage du pneumatique, et aux blessures qui se produisent.

L'invention sera mieux comprise à l'aide du dessin annexé à la description illustrant un exemple non limitatif d'exécution, où l'on voit :
- sur la figure 1, comparativement au profil méridien d'une jante actuelle normalisée, représenté en traits pointillés, le profil méridien de la jante de montage pour l'ensemble conforme à l'invention représenté en traits pleins, ces profils étant ceux existant côté montage du pneumatique,
- sur la figure 2, les mêmes profils méridiens mais côté opposé au côté du montage pneumatique,
- sur la figure 3, l'ensemble pneumatique jante monté, avec, en traits pointillés, le contour méridien du bourrelet du pneumatique non monté sur la jante.

Le contour méridien d'une jante (J), ayant des sièges inclinés (2) à 15° ± 1°, est, selon les normalisations internationales, principalement formé d'un rebord (1) de jante, circulaire de rayon (R₁), constant quels que soient la largeur (A) et le diamètre nominal (D_{N}) de la jante, rebord réuni au siège incliné (2) par une portion circulaire de rayon (R₂), constant lui aussi. Le siège incliné (2) s'étend sur une distance axiale (P) dont, selon les normes (ETRTO) la valeur minimale varie, selon les dimensions de jante, entre 25 et 36 mm. Côté montage du pneumatique, le siège (2) est réuni à la gorge de montage (3) par une succession de deux arcs de cercle de rayons (R₃) et (R₄) respectivement, égaux à 8 et 16 mm. La gorge (3) possède une profondeur (H) minimale ainsi qu'une largeur minimale à respecter pour un montage correct du pneumatique, cette profondeur et cette largeur étant normalisées.

Si l'on considère le côté opposé au côté montage du pneumatique, le rebord de jante (1) et le siège (2) sont symétriques au rebord (1) et au siège (2) côté montage. Par contre, le siège (2) est prolongé axialement à l'intérieur par une partie cylindrique (4) de largeur telle que la largeur axiale de la jante et la largeur axiale de sa gorge de montage soient respectées.

Cette partie cylindrique (4) a, par ailleurs, un diamètre inférieur ou égal à D_{N} - 22 mm, selon la dimension de jante.

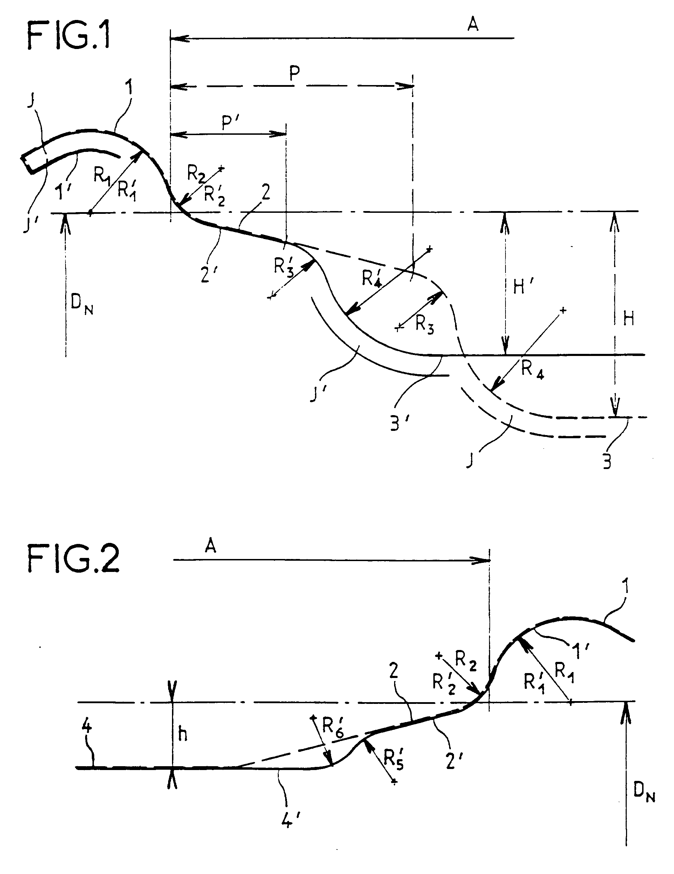

Par rapport à ce profil méridien normalisé, comme le montrent les figures 1 et 2, le profil méridien de la jante (J'), conforme à l'invention, comporte un siège (2'), dont la largeur axiale (P') est, dans le cas étudié d'une jante 22.5-8.25 pour un pneumatique 295/80.22.5, égale à 47 % de la largeur axiale (P), de 36 mm du siège (2) de la jante (J) de référence. Ce siège (2') est, côté montage du pneumatique, d'une part relié à un rebord de jante (1') identique au rebord de jante (1) et d'autre part à la gorge de montage (3') par l'intermédiaire de deux arcs de cercle de rayons (R'₃) et (R'₄) égaux aux rayons (R₃) et (R₄) de 8 mm correspondants de la jante de référence (J). La gorge de montage (3') possède alors une profondeur (H') égale à 21 mm, soit 0,7 H, H étant égale à 30 mm pour la jante de référence (J).

Côté opposé au côté montage du pneumatique, le profil méridien de la jante (J') comporte un rebord et un siège symétriques au rebord (1') et siège (2') du côté montage du pneumatique. Par contre, le siège (2') est relié à la partie cylindrique (4'), de diamètre identique à la partie cylindrique (4) de la jante (J) de référence, par l'intermédiaire d'une suite de deux arcs de cercle de rayons (R'₅) et (R'₆) égaux au rayon (R'₃) de 8 mm.

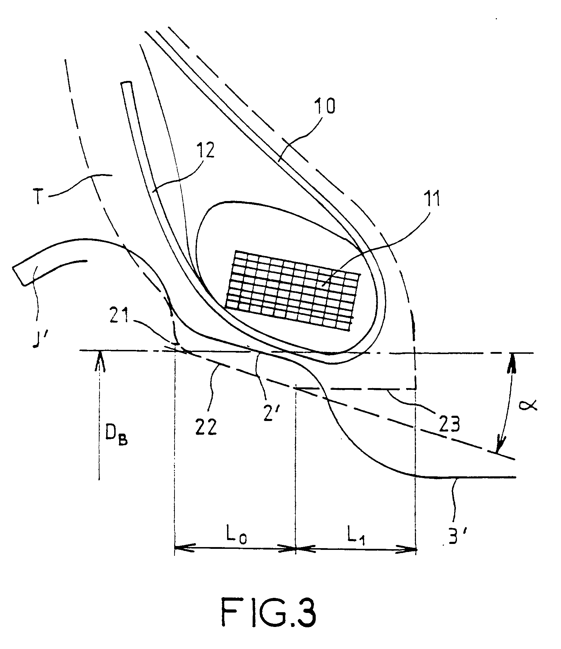

Quant au pneumatique (T) (figure 3), il est doté d'une armature de carcasse radiale (10) et d'une armature de sommet, d'au moins deux nappes de fils ou câbles croisés (non montré). L'armature de carcasse (10) est ancrée dans chaque bourrelet à une tringle (11), dans le cas présent, de fils rectangulaires, et forme un retournement (12). Le profil méridien du bourrelet, destiné à entrer en contact avec la jante, se compose principalement d'une partie verticale (21) réunie au siège (22) de bourrelet par un arrondi de faible rayon. Ce siège (22) de largeur axiale (Lₒ), égale à la largeur (P') du siège (2') de la jante (J') de montage, est incliné d'un angle (α) égal à 18° , par rapport à l'axe de rotation de l'ensemble pneumatique-jante. Le fait que le diamètre (D_{B}) du bourrelet soit inférieur de 3 mm au diamètre (D_{N}) de la jante (J') et le fait que l'angle d'inclinaison du siège de bourrelet soit supérieur à l'angle d'inclinaison du siège de jante font en sorte que le serrage du bourrelet sur la jante (J') est suffisant pour assurer d'une part une étanchéité correcte et d'autre part une bonne tenue du bourrelet sur la jante en fonction des contraintes composées au pneumatique.

Le siège (22) est prolongé axialement à l'intérieur par une portion (23) parallèle à l'axe de rotation, pour former la pointe du bourrelet qui, comme montré sur la figure 3, ne vient pas en contact avec la jante. La largeur axiale (L₁) de cette portion (23) est égale à la largeur (Lₒ) de la portion (22).

## Revendications

1. Jante (J') de diamètre nominal normalisé (D_{N}) de largeur axiale normalisée (A), et ayant de sièges tronconiques (2') inclinés d'un angle de 15 ± 1° par rapport à l'axe de rotation, caractérisée en ce que vue en section méridienne, la largeur axiale (P') de chacun de ses sièges (2') est comprise entre 35 % et 55 % de la largeur (P) nominale normalisée de chacun des sièges tronconiques (2) de la jante (J) normalisée ayant même diamètre nominal (D_{N}) et même largeur axiale (A), et en ce que sa gorge de montage (3') présente une profondeur (H') comprise entre 65 % et 75 % de la profondeur (H) de la gorge de montage (3) de la jante (J) de référence, ladite gorge (3') étant réunie du côté opposé au côté de montage du pneumatique à une partie cylindrique (4') de diamètre identique au diamètre de la partie cylindrique (4) de la jante de référence (J), ladite partie cylindrique (4') étant reliée au siège tronconique (2') par deux arcs de cercle axialement adjacents de rayons égaux (R'₆, R'₅).

2. Ensemble roulant, composé d'une jante à sièges tronconiques inclinés d'un angle de 15° ± 1° par rapport à l'axe de rotation et d'un pneumatique de type "Poids lourd" sans chambre à air indépendante et dont les bourrelets ont de sièges à profils méridiens adaptés aux sièges de jante, caractérisé en ce que la jante (J') est une jante selon la revendication 1 et en ce que le pneumatique (T) à armature de carcasse radiale (10), a des sièges de bourrelets (22, 23) de diamètre (D) au plus égal au diamètre (D_{N}) de la jante de montage (J') et dont le profil méridien se compose d'une portion (22) inclinée d'un angle (α) compris entre 15° et 20° et de largeur axiale (Lₒ) comprise entre 90 % et 110 % de la largeur (P') su siège de jante (J'), prolongée axialement à l'intérieur par une portion (23) faisant avec l'axe de rotation de l'ensemble un angle compris entre 5° et 0° et de largeur (L₁) au plus égale à la largeur (Lₒ).

## Claims

1. A rim (J') of standard nominal diameter (D_{N}) and of standard axial width (A), having frustoconical seats (2') which are inclined by an angle of 15 ± 1° with respect to the axis of rotation, characterised in that, seen in meridian section, the axial width (P') of each of its seats (2') is between 35% and 55% of the standard nominal width (P) of each of the frustoconical seats (2) of the standard rim J having the same nominal diameter (D_{N}) and the same axial width (A), and in that its mounting groove (3') has a depth (H') between 65% and 75% of the depth (H) of the mounting groove (3) of the reference rim (J), said groove (3') being connected on the side opposite the mounting side of the tyre to a cylindrical part (4') of a diameter identical to the diameter of the cylindrical part (4) of the reference rim (J), said cylindrical part (4') being connected to the frustoconical seat (2') by two axially adjacent circular arcs of equal radii (R'₆, R'₅).

2. A rolling assembly formed of a rim with frustoconical seats inclined by an angle of 15 ± 1° with respect to the axis of rotation and a tyre of "heavy vehicle" type without independent inner tube, the beads of which have seats with meridian profiles adapted to the rim seats, characterised in that the rim (J') is a rim in accordance with Claim 1 and in that the tyre (T) with radial carcass reinforcement (10) has bead seats (22, 23) of a diameter (D) at most equal to the diameter (D_{N}) of the mounting rim (J') and the meridian profile of which is formed of a portion (22) inclined by an angle (α) of between 15° and 20° and of an axial width (Lₒ) of between 90% and 110% of the width (P') of the rim seat (J'), extended axially to the inside by a portion (23) which forms an angle of between 5° and 0° with the axis of rotation of the assembly and has a width (L₁) at most equal to the width (Lₒ).

## Patentansprüche

1. Felge (J') mit genormtem Nenndurchmesser (D_{N}), genormter axialer Breite (A) und kegelstumpfförmigen Schultern (2'), die in bezug auf die Drehachse um einen Winkel von 15 ± 1° geneigt sind,
**dadurch gekennzeichnet,**
daß im Meridianschnitt die axiale Breite (P') jeder ihrer Schultern (2') 35 bis 55 % der genormten Nennbreite (P) jeder der kegelstumpfförmigen Schultern (2) der genormten Felge (J) mit gleichem Nenndurchmesser (D_{N}) und gleicher axialer Breite (A) beträgt und
ihre Montagekehle (3') eine Tiefe (H') aufweist, die 65 bis 75 % der Tiefe (H) der Montagekehle (3) der Bezugsfelge (J) beträgt, wobei die Montagekehle (3') an der der Montageseite des Reifens gegenüberliegenden Seite mit einem zylindrischen Teil (4') verbunden ist, der gleichen Durchmesser wie der zylindrische Teil (4) der Bezugsfelge (J) aufweist und über zwei Kreisbögen mit gleichen Radien (R'₆, R'₅) mit der kegelstumpfförmigen Schulter (2') verbunden ist.

2. Radeinheit aus einer Felge mit unter einem Winkel von 15 ± 1° in bezug auf die Drehachse geneigten kegelstumpfförmigen Schultern und einem schlauchlosen Reifen vom Schwerlasttyp, dessen Wülste Sitze mit Meridianprofilen aufweisen, die den Schultern der Felge angepaßt sind,
**dadurch gekennzeichnet,**
daß die Felge (J') eine Felge nach Anspruch 1 ist und der Reifen (T), der eine Radialkarkasse (10) besitzt, Wulstsitze (22, 23) mit einem Durchmesser (D) aufweist, der höchstens gleich dem Durchmesser (D_{N}) der Montagefelge (J') ist, und deren Meridianprofil sich aus einem Abschnitt (22) zusammensetzt, der unter einem Winkel (α) von 15 bis 20° geneigt ist und eine axiale Breite (L₀) aufweist, die 90 bis 110 % der Breite (P') der Schulter der Felge (J') beträgt und sich axial nach innen in einen Bereich (23) fortsetzt, der mit der Drehachse der Einheit einen Winkel von 5 bis 0° bildet und eine Breite (L₁) aufweist, die höchstens gleich der Breite (L₀) ist.
